# EUROPEAN PATENT APPLICATION

(11) **EP 3 929 839 A1**
(43) Date of publication of application: **29.12.2021**
(21) Application number: 20305719.5
(22) Date of filing: 26.06.2020
(51) Int. Cl.: G06Q 10/08, G06Q 20/20

(54) **METHOD AND SYSTEM FOR DETECTING FILING PARAMETERS OF A POINT-OF-SALE DISPLAY**

(71) Applicant: Invoxia, 92130 Issy Les Moulineaux (FR)
(72) Inventor: HUMBERT, Eric, 92100 BOULOGNE BILLANCOURT (FR); CAUDRON, Amélie, 75012 PARIS (FR); DEVIGE, Fabrice, 92170 VANVES (FR)
(74) Representative: Plasseraud IP

(57) **Abstract**

A method for detecting filling parameters of a point-of-sale display (2), the point-of-sale display (2) being intended to receive predetermined products (22), said method comprises:
- emitting a wave in the point-of-sale display (2) ;
- sensing an echo wave generated by reflection and / or backscattering of the emitted wave in the point-of-sale display (2);
- transmitting a signal representative of said echo wave to a calculating unit (15) comprising at least one predictive model configured to determine how much the point-of-sale display (2) is filled with products and/or configured to determine a probability that products placed in the point-of-sale display (2) correspond to said predetermined products (22),
the method further comprising:
- calculating an inference of the at least one predictive model to determine filling parameters of the point-of-sale display (2).

## Description

### Technical Field

This disclosure pertains to the field of the methods and systems for detecting filling parameters of a point-of-sale display, and to point-of-sale displays comprising such systems.

### Background Art

Point-of-sale materials are provided to shops by providers of products. The point-of-sale materials can present predetermined products that are not owned by the owner of the shop, but the predetermined products are contracted to be placed on the shelves of the point-of-sale display and the shelves need to be refilled with the predetermined products.

Providers of the products displayed on the point-of-sale display generally arrange contractually with the owner of the shop to sell some of the products presented by the point-of-sale material.

When a provider of a product has a plurality of such point-of-sale materials, in a plurality of shops, a large sales force has to be physically employed to verify the point-of-sale displays. For example, such verification includes checking if the shelves of the point-of-sale display are filled with predetermined products and in a satisfying rate of filling.

It is known from document WO2007/149967 to install optical sensors in the shelves of a display. The optical signal emitted by the optical sensors is reflected and measured so an algorithm can analyze the reflected optical signal. The heights of the products are already known and the algorithm is configured to calculate, based on the reflected optical signal, the total height of the products placed on the shelves to determine a filling rate.

However, a bias can occur when non-predetermined products are placed on the shelves.

It then exists a need to verify the point-of-sale display, without hiring people to go verify in all the shops comprising point-of-sale displays.

### Summary

This disclosure improves the situation.

It is proposed a method for detecting filling parameters of a point-of-sale display, the point-of-sale display being intended to receive predetermined products, said method comprising:
- emitting a wave in the point-of-sale display ;
- sensing an echo wave generated by reflection and / or backscattering of the emitted wave in the point-of-sale display;
- transmitting a signal representative of said echo wave to a calculating unit comprising at least one predictive model configured to determine how much the point-of-sale display is filled with products and/or configured to determine a probability that products placed in the point-of-sale display correspond to said predetermined products,
the method further comprising:
- calculating an inference of the at least one predictive model to determine filling parameters of the point-of-sale display.

The proposed method allows then to verify filling parameters without needing a physical person to go on the shop to verify. Moreover, the use of a predictive model gives accurate and robust results in the detection.

The following features, can be optionally implemented, separately or in combination one with the others:

In an embodiment said at least one first predictive model includes at least one first predictive model, the method further comprising a prior first learning phase of a at least one first predictive model configured to determine how much the point-of-sale display is filled with products, said first learning phase comprising:
- filling the shelf with the predetermined products, according to a filling amount,
- emitting a wave by the transceiver and sensing an echo wave generated by reflection and / or backscattering of said emitted wave;
wherein the learning phase is repeatedly performed according to different filling amounts;
- using supervised learning to train said at least one first predictive model until it converges;
- storing said first predictive model;

In an embodiment said at least one first predictive model includes at least one second predictive model, the method further comprising a prior second learning phase of a at least one second predictive model configured to determine a probability that the products placed in the point-of-sale display correspond to the predetermined products, said second learning phase comprising:
- determining a type of predetermined products to be placed in the point-of-sale display;
- filling the point-of-sale display with the predetermined products;
- emitting a wave by the transceiver and sensing an echo wave generated by reflection and / or backscattering of said emitted wave;
wherein the second learning phase is repeatedly performed according to different types of predetermined products;
- using supervised learning to train said at least one second predictive model until it converges;
- storing said at least one second predictive model;

In an embodiment as many trained second predictive models as there are different types of predetermined products are stored;

In an embodiment the point-of-sale display comprises a plurality of shelves intended to receive the predetermined products, each shelf being provided with a transceiver configured to emit a wave toward said shelf and sense the echo wave generated by reflection and / or backscattering of said emitted wave, the method further comprising:
repeatedly performing the prior first and second learning phases for each of the shelves of the point-of-sale display, such that as many trained first and second predictive models as there are shelves are stored;

In an embodiment, the point-of-sale display comprises a plurality of distinct types of shelves intended to receive the predetermined products, each shelf being provided with a transceiver configured to emit a wave toward said shelf and sense the echo wave generated by reflection and / or backscattering of said emitted wave, the method further comprising:
repeatedly performing the prior first and second learning phases for each of the distinct types of shelves of the point-of-sale display, such that as many trained first and second predictive models as there are distinct types of shelves are stored;

In an embodiment the at least one predictive model is a multi-task predictive model configured to determine how much the point-of-sale display is filled with products together with a probability that the products placed on the at least one shelf are the predetermined products, the method further comprising a prior learning phase comprising:
- determining a type of predetermined products to be placed in the point-of-sale display;
- filling the point-of-sale display with said predetermined products, according to different filling amounts;
- emitting a wave by the transceiver and sensing an echo wave generated by reflection and / or backscattering of said emitted wave;
wherein the learning phase is repeatedly performed according to different filling amounts and / or different types of predetermined products;
- using supervised learning to train said multitask predictive model until it converges;
- storing said multitask predictive model;

In an embodiment the point-of-sale display comprises a plurality of shelves intended to receive the predetermined products, each shelf being provided with a transceiver configured to emit a wave toward said shelf and measure the echo of said emitted wave, the method further comprising:
repeatedly performing the prior learning phases for each of the shelves of the point-of-sale display, such that as many trained multi task predictive models as there are shelves are stored;

In an embodiment, the point-of-sale display comprises a plurality of distinct types of shelves intended to receive the predetermined products, each shelf being provided with a transceiver configured to emit a wave toward said shelf and measure the echo of said emitted wave, the method further comprising:
repeatedly performing the prior learning phases for each of the distinct types of shelves of the point-of-sale display, such that as many trained multi task predictive models as there are distinct types of shelves are stored;

In then appears that different types of predictive models can be trained and used for the same method. The type of predictive model can be chosen according to a storing capacity or a desired accuracy.

In an embodiment the at least one predictive model is a neural network.

In an embodiment the emitted wave is:
- an impulsion;
- a swept sine;
- a pseudo-random wave.

The present application also provides a system for detecting filling parameters of a point-of-sale display, the point-of-sale display being adapted to receive predetermined products, said system comprising:
- a calculating unit;
- at least one transceiver configured to emit a wave and sense an echo wave generated by reflection and / or backscattering of said emitted wave;
the calculating unit being configured to analyze a an echo wave representative of said echo wave by of at least one predictive model configured to determine how much the point-of-sale display is filled with products and/or a probability that the products filling the point-of-sale display are the predetermined products.

The proposed system allows to use small and relatively cheap components while permitting a really good accuracy and robustness in the results of the detection.

In an embodiment, the point-of-sale display comprises a plurality of shelves each intended to receive the predetermined products, said system comprising:
- a primary component comprising the calculating unit,
- for each shelf, one secondary component comprising said transceiver, the secondary component further comprising a communication interface configured to transmit said echo wave to the primary component via a communication interface, the calculating unit of the primary component being configured to analyze said echo waves by predictive models configured to determine how much each shelf is filled with products and/or a probability that the products placed on each shelf are the predetermined products.

In an embodiment, the communication interfaces of both said primary and secondary components are short-range radio interface, and preferably Bluetooth communication interfaces.

In an embodiment, the primary component is configured to store as many predictive models configured to determine a probability that the products placed on the shelf are the predetermined products as there are distinct predetermined products and shelves, and as many predictive models configured to determine how much each shelf is filled with products as there are shelves.

In an embodiment, the primary component is configured to store as many predictive models configured to determine a probability that the products placed on each distinct type of shelve are the predetermined products as there are distinct predetermined products, and as many predictive models configured to determine how much each shelf is filled with products as there are distinct types of shelves.

In an embodiment, the at least one predictive model is a multi-task predictive model being configured to determine how much each shelf is filled with products together with a probability that the products placed on the same shelf are the predetermined products, the primary component comprising as many multi-task predictive models as there are shelves of the point-of-sale display.

In an embodiment, the at least one predictive model is a multi-task predictive model being configured to determine how much each distinct type of shelf is filled with products together with a probability that the products placed on the same shelf are the predetermined products, the primary component comprising as many multi-task predictive models as there are distinct type of shelves of the point-of-sale display.

In an embodiment, the transceiver comprises at least one of:
- an infrared transceiver;
- an ultrasound transceiver; and/or
- electromagnetic wave transceiver configured to use Gigahertz and/or Terahertz electromagnetic waves.

The present application also provides a point-of-sale display adapted to receive predetermined products, said point-of-sale display comprising a system according to the invention.

### Brief Description of Drawings

Other features, details and advantages will be shown in the following detailed description and on the figures, on which:
**Fig. 1**

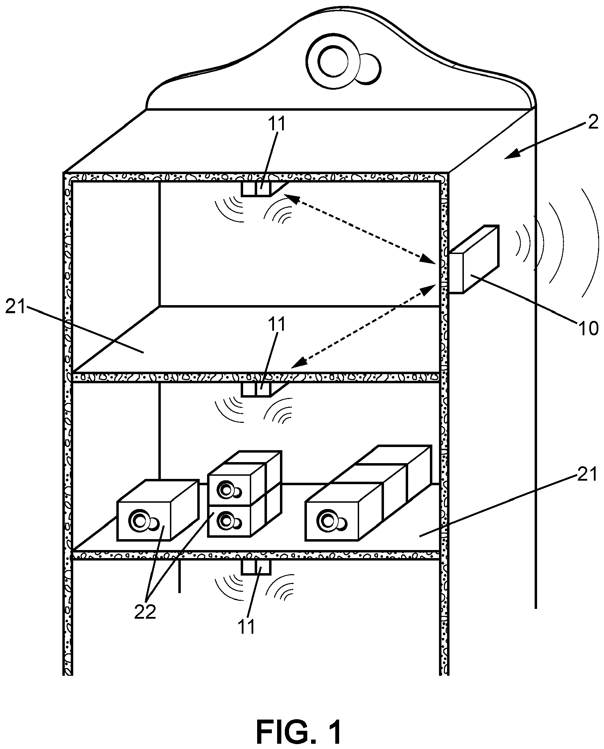

   [Fig. 1] is a schematic view of a system for detecting filling parameters of a point-of-sale display.
**Fig. 2**

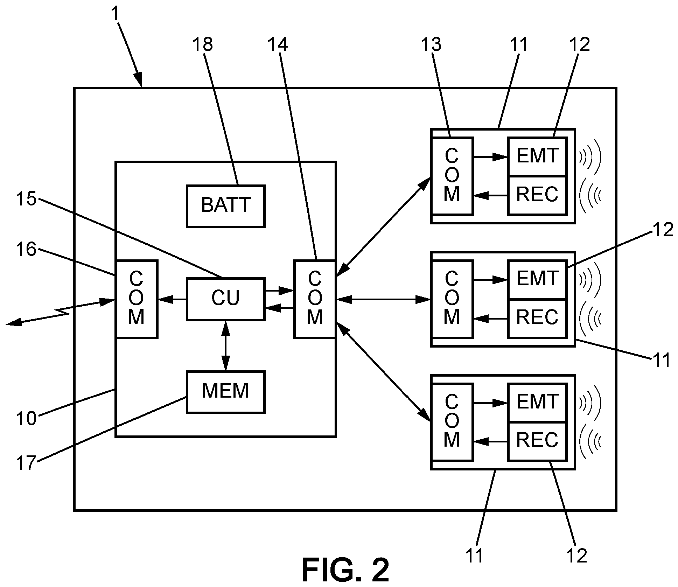

   [Fig. 2] is a block schema of the system illustrated on figure 1.
**Fig. 3**

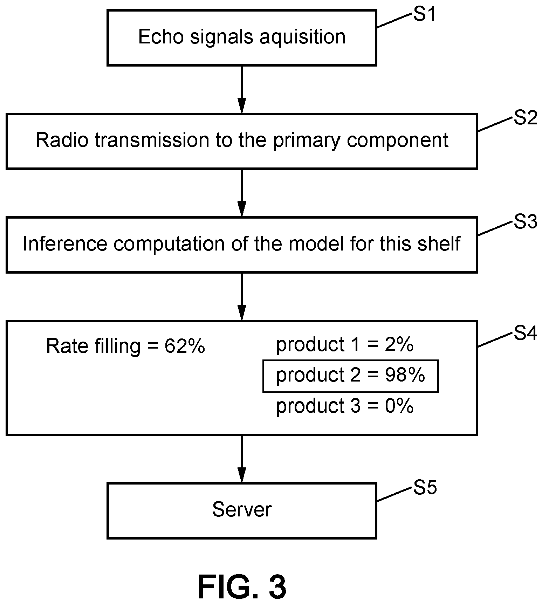

   [Fig. 3] is block diagram illustrating the steps of a method for detecting filling parameters of a point-of-sale display.
**Fig. 4**

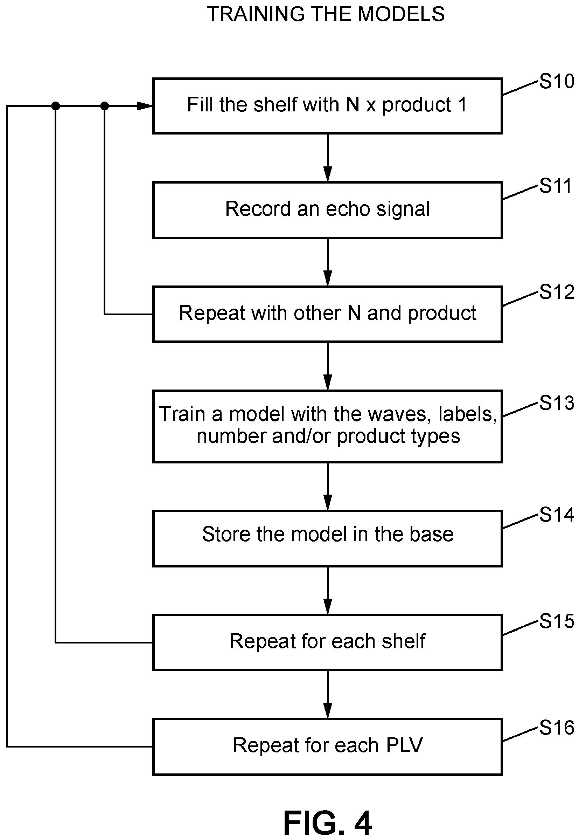

   [Fig. 4] is block diagram illustrating the training phase of a predictive model for detecting filling parameters of a point-of-sale display.
**Fig. 5**

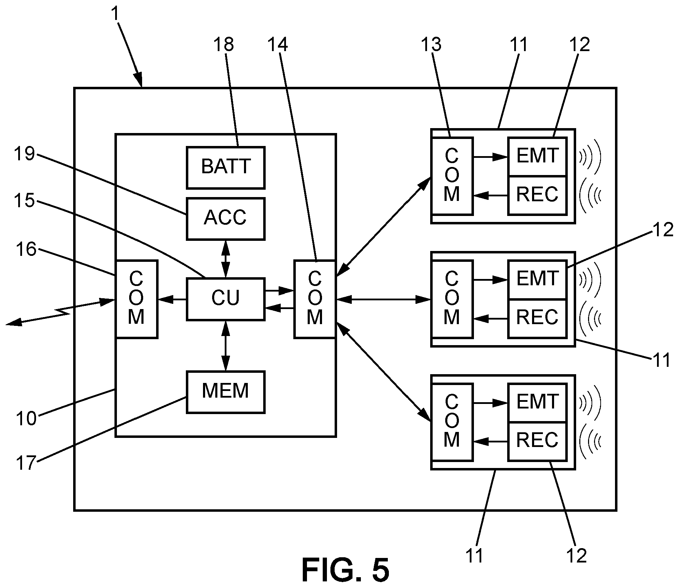

   [Fig. 5] is a block schema of the system according to another embodiment.

### Description of Embodiments

Figures and the following detailed description contain, essentially, some exact elements. They can be used to enhance understanding the disclosure and, also, to define the invention if necessary.

It is now referred to figure 1 which illustrates a system 1 for detecting filling parameters of a point-of-sale display 2.

A point-of-sale display 2 generally comprises a plurality of shelves 21 on which products 22 to be sold by the manufacturers are placed. The products 22 to be sold are referred as predetermined products 22 in the following description. The predetermined products 22 comprise all the products supposed to be placed and sold on the point-of-sale display 2.

In the following description, the system and the method for detecting filling parameters of the point-of-sale display are described with regard to a point-of-sale display comprising a plurality of shelves.

However, the system and method described herein after can be used for a point-of-sale display comprising only a single shelf, or no shelf at all.

To determine filling parameters of the point-of-sale display 2, a system 1 can be embedded in the point-of-sale display 2.

More specifically, the system 1 is configured to determine how much products 2 are placed on the shelves of the point-of-sale display 2 and/or a probability that the products placed on the point-of-sale display 2 are predetermined products 2.

To this aim, and as can be seen in more details on figure 1 together with figure 2, the system 1 comprises a primary component 10 and at least one secondary component 11.

The primary component 10 can be placed on one shelf of the point-of-sale display 2. Advantageously, one secondary component 11 is placed above each shelf 21 of the point-of-sale display 2, such that each secondary component 11 faces the products 22 placed on the shelf 21 below.

The secondary components 22 comprise a transceiver 12 with an emitting component and a receiving component. The transceiver 12 is configured to emit a wave toward the shelves below. The wave is reflected by the shelf 21 and the products 22 placed on the shelves. The receiving component of the transceiver measure the echo wave of the emitted wave.

Measuring the echo wave consists of emit a wave in a direction and measure the reflected wave generated by reflection and / or backscattering of said emitted wave in the same direction.

The emitted wave can be an impulsion. In another embodiment, the emitted wave is a swept sine. In another embodiment, the emitted wave is a pseudo random wave.

In an embodiment, the transceiver uses infrared light. In another embodiment, the transceiver uses ultrasound wave. In another embodiment, the transceiver uses Gigahertz and/or Terahertz electromagnetic waves.

Each secondary component 11 can communicate with the primary component 10 by a communication interface 13. The measured echo wave is transferred to the primary component 10 by said communication interface 13.

The primary component 10 comprises a communication interface 14. The communication interfaces 13, 14 can be short-range radio interfaces. For example, the communication interfaces 13, 14 use Bluetooth protocol.

The primary component 10 further comprises a calculating unit 15 for analyzing the measured echo waves of the emitted waves emitted by the transceiver 12 of each of the secondary components 11. The calculating unit 15 is configured to analyze the echo waves to determine filling parameters of the point-of-sale display 2. The analyzing of the echo wave will be further detailed with reference to figures 3 to 4.

The result of the analyzing can be sent to a remote device or a server (not shown) by a second communication interface 26. The second communication interface can be a radio communication interface communicating by using internet.

Thus, the manufacturer of the predetermined products 22 can verify the filling parameters of the point-of-sale display without going in person to the shop.

The primary component 10 further comprises a non-volatile and a volatile memory 17. The non-volatile memory can store at least one predictive model configured to detect filling parameters of the point-of-sale display 2, as will be describe below.

The primary component 10 and the secondary components further comprise a battery 18.

The system 1, when embedded to a point-of-sale display, is fully autonomous and automatic.

Furthermore, the electronic components of the system 1 present the advantageous of being sufficiently small so the system can be embedded in the point-of-sale display 2, out of the sight of consumers or the owner of the shop. The electronics is also advantageously cheap. The manufacturer of the predetermined products 22 placed on the point-of-sale display 2 can then easily equipped each of the point-of-sale displays 2 with one system 1 as described with reference to figures 1 and 2.

Figure 3 shows in more detail a method for detecting filling parameters of one shelf a point-of-sale display 2.

As stated above, the filling parameters comprise how much products are placed on a shelf 21 of the point-of-sale display 2 and/or a probability that the products placed on the shelf 21 are predetermined products 22.

At step S1, at least one primary component 11 emits a wave and acquires the echo wave of the emitted wave. The emitted wave is directed towards the shelf 21 above which the secondary component 11 is placed. Then, the echo wave of the emitted waves carries information about products and quantity of products placed on the shelf 21.

More precisely, the primary component 10 can send a command to at least one, several or all secondary component 11 such that said at least one, several or all secondary components 11 emit a wave and acquire the echo wave of the emitted wave.

The primary component 10 can send the command to the secondary components 11 periodically. For example, the command is sent every 5 minutes, 10 minutes or one time per hour.

In another embodiment illustrated on figure 5, the primary component 10 sends the command when an accelerometer 19 detects a movement.

The detected movement is for example the movement of a customer grabbing one of the products on the point-of-sale display, or a product being moved on the point-of-sale display.

In an embodiment, the command sent by the primary component 10 comprises an identifier of a waveform stored in the memory 17 of the system 1.

The wave emitted by the secondary components 11 then corresponds to the predefined identifier.

In this embodiment, a few types of waveforms are predefined.

In another embodiment, the primary component 10 directly sends the waveform to be emitted to the secondary components 11.

In this embodiment, the waveform can vary from one command to another.

Then, the secondary components 11 don't emit the same wave over time.

This allows having a more flexible system since the waves emitted by the secondary components 11 can be modified over time by updating the primary component 10.

After emitting the wave, the secondary components 11 aquire the echo of the emitted wave.

The echo wave acquired by the secondary component 11 is then transferred to the primary component 10 at step S2.

The calculating unit 15 of the primary component 10 performs the analysis of the echo wave at step S3.

More precisely, the calculating unit 15 uses a predictive model trained to determine filling parameters of the point-of-sale display 2. The inference computation of the predictive model is calculated for the shelf for which the echo wave has been acquired.

At step S4, the filling parameters are determined. In one embodiment, a filling rate of the shelf is determined. For example, and as illustrated on figure 3, it is determined that the shelf is filled at 62% with products.

Then, the prediction of how much products are placed on the shelf can be a regression task.

In another embodiment, the prediction task is a classification task. Then, a level of filling is determined instead of a percentage of filling.

For example, different levels or filling are predetermined. The predictive model is feed with the different levels of filling.

In an embodiment, each level of filling comprises a range of filling. The ranges can be expressed in percentage. For example, ten levels can be predetermined, each level comprising a range of percentage equally spaced. Level 1 can include filling rates from 0% to 9%, level 2 includes filling rates from 10% to 19%.

Since the ranges of filling are predetermined, the manufacturer can modify the number of levels to get more accurate results.

In an embodiment, the primary component 10 comprises for each shelf of the point-of-sale display one predictive model configured to determine how much products are placed on the corresponding shelf.

The filling parameters can also comprise a probability that the products placed on the shelf 21 are predetermined products 22.

Since several different predetermined products can be placed on a same shelf of a point-of-sale display, or more generally, one predetermined product can be placed on one shelf while distinct predetermined products can be placed on the other shelves of the point-of-sale display, the primary component 10 comprise as many predictive models as there are distinct predetermined products and distinct shelves.

In another embodiment, there are as many predictive models as there are distinct predetermined products and distinct types of shelves.

The prediction of the probability that the products placed on the shelf 21 are predetermined products 22 can be a classification task.

Figure 3 illustrates an embodiment where three different predetermined products 22 are placed on a shelf. At step S4, it is determined the probability that the products placed on the shelf are one of the three predetermined products 22.

In this particular embodiment, the probability that the predetermined product "product2" is effectively placed on the shelf is 98%.

The results of the analysis can be sent via the second communication interface 16 to a server (not shown) at step S5. The manufacturer of the predetermined products is then able to verify that the filling parameter is sufficiently high and that the products placed on the shelf effectively correspond to the predetermined products 22 (product2 in this particular embodiment).

In the embodiment described above and for each shelf of the point-of-sale display, there are as many predictive models as there are distinct predetermined products. Moreover, another predictive model is used to detect how much products are placed on a shelf.

Then, the number of predictive models can grow exponentially, depending on the numbers of shelves and the number of predetermined products.

In another embodiment, a multi tasks predictive model is used instead.

In this embodiment, one multitask model is able to determine how much products are placed on a shelf together with a probability that the products placed on the shelf 21 are predetermined products 22.

Then, there are as many multi task predictive models are there are shelves.

In an embodiment, there are as many multi task predictive models are there are distinct types of shelves.

The number of predictive models used is then lower.

In all the embodiments described above, the predictive models and the multi tasks predictive models can be neural networks.

Before storing the predictive models, a prior step of learning is performed. This step is described with reference to figure 4. This figure illustrates more precisely the learning phase of multitask predictive models.

At step S10, the shelf is filled with a number N of predetermined products. The predetermined products placed on the shelf are the same predetermined products, for example product1.

At step S11, waves are emitted and corresponding the echo waves are acquired by at least one secondary component 11. The predictive model is then feed with the raw echo waves.

In a particular embodiment, a features extraction step is performed prior to step S11. In this embodiment, some features are extracted from the echo waves. The predictive model is feed with these features instead of the raw echo waves.

At step S12, steps S10 and S11 are performed again with a different predetermined product, for example product2.

At step S13, the predictive model configured to determine a probability that the products placed on the shelf 21 are predetermined products 22 is trained with the echo waves and their parameters. The parameters can include the type of predetermined product (product1 or product 2, for example), as well as the number of predetermined products placed on the shelf during steps S10 to S12.

Then predictive model is then trained on the basis of several different filling amounts of predetermined products on one shelf, as well as the type of predetermined product.

At step S14, the trained predictive model is stored in the primary component 10.

At step S15, steps S10 to 14 is done again for each one of the shelves of the point-of-sale display. It exists then as many predictive models as there are distinct type of shelves of the point-of-sale display.

Finally, at step S16, steps S10 to S15 are performed again for each point-of-sale display.

The training step can be performed in a closed place, prior to placing the point-of-sale display in a shop. It allows faster and more convenient data collection.

A further step can also be performed, during which steps S11 to S16 are partially or integrally performed again while the point-of-sale display is in the shop. In this way, he echo waves measured by the secondary components comprise the surrounding noises such that the prediction can be even more accurate and robust.

## Claims

1. Method for detecting filling parameters of a point-of-sale display (2), the point-of-sale display (2) being intended to receive predetermined products (22), said method comprising:
- emitting a wave in the point-of-sale display (2) ;
- sensing an echo wave generated by reflection and / or backscattering of the emitted wave in the point-of-sale display (2);
- transmitting a signal representative of said echo wave to a calculating unit (15) comprising at least one predictive model configured to determine how much the point-of-sale display (2) is filled with products and/or configured to determine a probability that products placed in the point-of-sale display (2) correspond to said predetermined products (22),
the method further comprising:
- calculating an inference of the at least one predictive model to determine filling parameters of the point-of-sale display (2).

2. Method according to claim 1, wherein said at least one first predictive model includes at least one first predictive model, the method further comprising a prior first learning phase of a at least one first predictive model configured to determine how much the point-of-sale display (2) is filled with products, said first learning phase comprising:
- filling the shelf (21) with the predetermined products (22), according to a filling amount,
- emitting a wave by the transceiver and sensing an echo wave generated by reflection and / or backscattering of said emitted wave;
wherein the learning phase is repeatedly performed according to different filling amounts;
- using supervised learning to train said at least one first predictive model until it converges;
- storing said first predictive model.

3. Method according to claims 1 or 2, wherein said at least one first predictive model includes at least one second predictive model, the method further comprising a prior second learning phase of a at least one second predictive model configured to determine a probability that the products placed in the point-of-sale display (2) correspond to the predetermined products (22), said second learning phase comprising:
- determining a type of predetermined products (22) to be placed in the point-of-sale display (2);
- filling the point-of-sale display (2) with the predetermined products (22);
- emitting a wave by the transceiver and sensing an echo wave generated by reflection and / or backscattering of said emitted wave;
wherein the second learning phase is repeatedly performed according to different types of predetermined products (22);
- using supervised learning to train said at least one second predictive model until it converges;
- storing said at least one second predictive model.

4. Method according to claim 3, wherein as many trained second predictive models as there are different types of predetermined products (22) are stored.

5. Method according to claims 2 to 4, wherein the point-of-sale display (2) comprises a plurality of shelves (21) intended to receive the predetermined products (22), each shelf (21) being provided with a transceiver (12) configured to emit a wave toward said shelf (21) and sense the echo wave generated by reflection and / or backscattering of said emitted wave, the method further comprising:
repeatedly performing the prior first and second learning phases for each of the shelves (21) of the point-of-sale display (2), such that as many trained first and second predictive models as there are shelves (21) are stored.

6. Method according to claim 1, wherein the at least one predictive model is a multi-task predictive model configured to determine how much the point-of-sale display (2) is filled with products together with a probability that the products placed on the at least one shelf (21) are the predetermined products (22), the method further comprising a prior learning phase comprising:
- determining a type of predetermined products (22) to be placed in the point-of-sale display (2);
- filling the point-of-sale display (2) with said predetermined products (22), according to different filling amounts;
- emitting a wave by the transceiver (12) and sensing an echo wave generated by reflection and / or backscattering of said emitted wave;
wherein the learning phase is repeatedly performed according to different filling amounts and / or different types of predetermined products (22);
- using supervised learning to train said multitask predictive model until it converges;
- storing said multitask predictive model.

7. Method according to claim 6, wherein the point-of-sale display (2) comprises a plurality of shelves (21) intended to receive the predetermined products (22), each shelf (21) being provided with a transceiver (12) configured to emit a wave toward said shelf (21) and measure the echo of said emitted wave, the method further comprising:
repeatedly performing the prior learning phases for each of the shelves (21) of the point-of-sale display (2), such that as many trained multi task predictive models as there are shelves (21) are stored.

8. Method according to any of claims 1 to 7, wherein the at least one predictive model is a neural network.

9. System (1) for detecting filling parameters of a point-of-sale display (2), the point-of-sale display (2) being adapted to receive predetermined products (22), said system (1) comprising:
- a calculating unit (15);
- at least one transceiver (12) configured to emit a wave and sense an echo wave generated by reflection and / or backscattering of said emitted wave;
the calculating unit (15) being configured to analyze a an echo wave representative of said echo wave by of at least one predictive model configured to determine how much the point-of-sale display (2) is filled with products and/or a probability that the products filling the point-of-sale display (2) are the predetermined products (22).

10. System (1) according to claim 9, wherein the point-of-sale display (2) comprises a plurality of shelves (21) each intended to receive the predetermined products (22), said system comprising:
- a primary component (10) comprising the calculating unit (15),
- for each shelf (21), one secondary component (11) comprising said transceiver (12), the secondary component (11) further comprising a communication interface (13) configured to transmit said echo wave to the primary component (10) via a communication interface (14),
the calculating unit (15) of the primary component (10) being configured to analyze said echo waves by predictive models configured to determine how much each shelf (21) is filled with products and/or a probability that the products placed on each shelf (21) are the predetermined products (22).

11. System (1) according to claim 9, wherein the communication interfaces (13, 14) of both said primary and secondary components (10, 11) are short-range radio interface, and preferably Bluetooth communication interfaces.

12. System (1) according to claims 10 or 11, wherein the primary component (10) is configured to store as many predictive models configured to determine a probability that the products placed on the shelf (21) are the predetermined products (22) as there are distinct predetermined products (22) and shelves (21), and as many predictive models configured to determine how much each shelf (21) is filled with products as there are shelves (21).

13. System (1) according to claims 9 to 12, wherein the at least one predictive model is a multi-task predictive model being configured to determine how much each shelf (21) is filled with products together with a probability that the products placed on the same shelf (21) are the predetermined products (22), the primary component comprising as many multi-task predictive models as there are shelves (21) of the point-of-sale display (2).

14. System (1) according to claims 9 to 13, wherein the transceiver (12) comprises at least one of:
- an infrared transceiver;
- an ultrasound transceiver; and/or
- electromagnetic wave transceiver configured to use Gigahertz and/or Terahertz electromagnetic waves.

15. Point-of-sale display (2) adapted to receive predetermined products (22), said point-of-sale display (2) comprising a system for detecting filling parameters of said point-of-sale display (2) according to any of claims 9 to 14.
